# EUROPÄISCHE PATENTANMELDUNG

(11) **EP 1 188 720 A1**
(43) Veröffentlichungstag der Anmeldung: **20.03.2002**
(21) Anmeldenummer: 00120355.3
(22) Anmeldetag: 16.09.2000
(51) Int. Cl.: C02F 1/78, C02F 9/00, C02F 1/40

(54) **Anlage für die Trennung von Fetten und Wasser in Abwässern**

(71) Anmelder: Diddens, Wilfried, 47441 Moers (DE)
(72) Erfinder: Diehl, Hans-Jürgen, 47608 Geldern (DE)

(57) **Zusammenfassung**

Die Erfindung betrifft ein Verfahren und eine Anlage zur Behandlung von Fetten in Abwässern (Fettabscheider). In das fetthaltige Abwasser wird Ozon mittels Pressluft eingebracht, so dass Fett durch Oxidation abgebaut wird (Anspruch 6 und 7). Die erfindungsgemäße Abwasserbehandlungsanlage reduziert wirksam den Anteil von lipophilen Bestandteilen im Abwasser. Gleichzeitig wird der CSB-Wert positiv beeinflusst und somit der Sauerstoffanteil im Abwasser erhöht. Dabei ist von großer Bedeutung, dass bereits bestehende schwerkrzftabhängige Fettabscheidesysteme problemlos nachzurüsten sind. Durch die Verwendung eines Ozonisators wird das Verfahren ohne Einsatz von Betriebsstoffen durchführbar.

## Beschreibung

Die Erfindung betrifft ein Verfahren zur Abwasserbehandlung für die Trennung von Fetten und zur Erhöhung des Restsauerstoffwertes im Abwasser.

Fetthaltige Abwässer fallen in größeren Mengen vor allem in Gastronomiebetrieben, Metzgereien, Großküchen (Kantinen) und in der fleischverarbeitenden Industrie an. Das Problem ist die Einleitung von Fetten in das kommunale Abwassemetz, welches durch die Abbauprodukte (Buttersäure) von Fetten und Ölen (tierisch wie pflanzlich) zerstört werden. Die Grenzwerte dieser Fette und Öle im Abwasser unterliegen den örtlichen Bestimmungen. So sind bei den entsprechenden Betrieben Fettabscheider vorgeschrieben. Diese bestehen üblicherweise aus einem Schlammfang, in welchem feste Abwasserbestandteile wie Gemüsereste, Fleischstückchen und ähnliches mit hohem spezifischen Gewicht nach einer gewissen Verweilzeit auf den Grund absinken. Aus dem Schlammfang gelangt das Abwasser über einen Überlauf (Rohrverbindung) in einen Fettabscheidebehälter. Hier setzen sich die Fettanteile, welche ein geringeres spezifisches Gewicht als Wasser haben, als Schwimmstoffe an der Oberfläche ab und können so vom restlichen Abwasser getrennt entsorgt werden. Derartige nach der Schwerkrafttrennung arbeitende Fettabscheideanlagen sind normiert nach der DIN 4040/E-DIN 4040-2.

Eine ausreichende Reduzierung des Fettanteils im Abwasser ist mit der Schwerkrafttrennung jedoch nicht möglich. Hier spielen besonders die Emulsionen zwischen Fett und Spülmitteln / Reinigungsmitteln eine große Rolle. Zur Einhaltung der örtlichen Vorschriften zur Abwassereinleitung darf der Fettgehalt nicht mehr als 200 bzw. 100 mg/l betragen. Hieraus ergibt sich die Notwendigkeit, zusätzliche Maßnahmen der Abwasseraufbereitung anzuwenden.

Die auf dem Markt befindliche Anlage DE-G-91 07 621.1 stellt ein Fettabscheidesystem zur Abscheidung tierischer und pflanzlicher Fette aus Abwässem dar, bei welchem in der Abscheidekammer eines mechanischen Fettabscheiders eine Belüftungsvorrichtung fest eingebaut ist und der Bakterien zugesetzt werden. Damit wird eine Anreicherung des Abwassers im Fettabscheideraum mit Sauerstoff und Bakterien erreicht. Auf diese Weise werden die im Abwasser vorhandenen Mikroorganismen aktiviert, so dass es zu einem verstärkten biologischen Fettabbau im Abwasser kommt. Daraus ergeben sich allerdings eine Reihe von Nachteilen. Der Fettanteil im Abwasser wird zwar abgesenkt, dafür werden aber die vorhandenen Mikroorganismen stark vermehrt, was unerwünschterweise zu einer zusätzlichen Belastung der kommunalen Abwässer führt. Der Bakteriengehalt im Abwasser - erhöht durch Zusatz von Mikroorganismen - unterliegt ebenso wie der Fettgehalt örtlichen Vorschriften, was dazu führt, dass der Betrieb von biologisch arbeitenden Abwasserreinigungsverfahren den Gewerbetreibenden untersagt sein kann.

Aus der DE-A-195 38 820 ist ein Abwasserreinigungsverfahren zur Reduzierung von schwer flüchtigen lipophilen Stoffen bekannt. Dabei durchläuft das Abwasser zunächst einen mechanischen Fettabscheider und einen nachfolgenden Feinfilter, bevor Kalksuspension zugesetzt wird und es zur Ausfällung der lipophilen Anteile im Abwasser kommt. Der sedimentierte Kalkschlamm wird dann einer getrennten Entsorgung zugeführt. Nachteilig ist hierbei der kontinuierlich notwendige Betriebsmitteleinsatz - Kalk-. Außerdem wird durch den Zusatz von Kalksuspension der pH-Wert des Abwassers stark beeinflusst. Gegebenfalls bedarf es einer nachfolgenden Neutralisation, um den pH-Grenzwert für die Abgabe in die Kanalisation einhalten zu können. Dies erfordert den Einsatz weiterer Betriebsmittel (Säuren).

Der hier vorgestellten Erfindung einer Abwasserbehandlungsanlage liegt die Aufgabe zugrunde, ein Verfahren zur Abwasserbehandlung zu schaffen, mit welchem der Gehalt lipophiler Stoffe wirksam und schnell reduziert werden kann. Das Verfahren soll dabei einfach und kostengünstig ohne den Einsatz von Betriebsstoffen anzuwenden sein (Anspruch 10).

Gelöst wird die Aufgabe durch ein Verfahren zur Behandlung von Fetten in emulgierten Abwässem, bei welchem Ozon in einem Reaktor in das Abwasser eingebracht wird. Durch die Oxidation des emulgierten Abwassers wird die Emulsion aufgebrochen und das Fett vom Wasser getrennt und stabil an die Oberfläche abgeschieden (Anspruch 1).

Durch dieses Verfahren ergeben sich folgende Vorteile:
1. Durch die Einperlung der Ozonluftmischung im Reaktor kommt es zu einer Blasen- / Fettverbindung, welche zu einer Oberflächenschicht - Abtrennschicht - im Rücklaufbehälter (Schlammfang) führt (Anspruch 2).

Bei Ozon handelt es sich um ein besonders starkes Oxidationsmittel. Hierdurch wird bei der Abwasserbehandlung eine biozide Wirkung erzielt. Die in großer Zahl vorhandenen Mikroorganismen (anaerob) werden abgetötet; das Abwasser wird einer Desinfektion unterzogen.

Durch die Behandlung mit Ozon werden die Fette im Abwasser chemisch abgebaut. Fettsäureketten werden aufgespalten (Ozonolyse), wobei Aldehyde und Ketone entstehen. Letztlich werden die Fettsäurebestandteile durch Oxidation zu Kohlendioxid und Wasser umgesetzt.

Ein weiterer Vorteil ergibt sich daraus, dass für die Geruchsbildung verantwortliche, flüchtige Verbindungen (Schwefel-Wasserstoff) durch Ozon angegriffen und oxidiert werden.
Eine vorteilhafte Ausgestaltung des Verfahrens ergibt sich (Anspruch 2 und 3) dadurch, dass das Abwasser vor der Behandlung mit Ozon einen Schlammfang und einen Fettabscheider teilweise durchläuft, das Wasser ist auf diese Weise bereits von groben Verunreinigungen und Feststoffen befreit, welche möglichst nicht mit dem Ozon in Kontakt kommen sollen. Nach der Ozonbehandlung im Reaktor wird das zurückgebliebene Wasser wieder in den Schlammfang und danach dem Fettabscheider zugeführt. So ergibt sich ein Kreislauf, der eine kontinuierliche Behandlung des Abwassers gewährleistet. Das Wasser wird somit wiederholt mit Ozon begast, was eine besonders effektive Fettreduzierung sicherstellt.
Der sich teilweise bildende fetthaltige Schaum (Anspruch 7) wird über den Schlammfang dem Fettabscheider zugeführt, wo er an der Oberfläche mit dem übrigen Fett abgeschieden wird. Die auf der Oberfläche befindliche harte Fettschicht verhindert, dass der übergelagerte Schaum wieder sein Fett an das Wasser abgibt.

Die zur Durchführung des Verfahrens vorgesehene Anlage besteht aus:
1. dem Schlammfang und einem Fettabscheider
2. einer Ozonerzeugungsanlage
3. einem Pumpensystem
4. einem Reaktor für die Begasung des Abwassers.

Der Reaktor ist das Herzstück der Anlage. Die Ausgestaltung dieses Reaktors bewirkt zu 80% die Funktion des Systems.
Der Reaktor (1) ist als Druckkessel ausgelegt und gasdicht. Die Gasdichtigkeit ist deshalb notwendig, da das stark oxidierende Ozon toxisch ist und nicht vom Bedienungspersonal der Anlage eingeatmet werden darf. Der Reaktor (1) besteht aus Edelstahl und ist so ausgelegt, dass das Abwasser über eine Kontaktröhre (1a) (Edelstahlrohr), welche in der Mitte des Reaktors angebracht ist, eingespeist wird. In der Kontaktröhre (III) wird das Ozon ausgeperlt und an das Abwasser herangeführt. Hier kommt es zu der gewünschten Oxidation.

Die Abwasserbehandlungsanlage ist eine Anlage, welche in ihrer Konzeptionierung eine Nachrüstung an allen vorhandenen Fettabscheideanlagen ermöglicht.

Laut Aufgabenstellung soll das patentierte Verfahren ohne Zusatz von Betriebsstoffen durchführbar sein. Es wird das Ozon mittels eines Kompressors (7b), Lufttrockners (I) und eines Ozonisators (II) aus Atmosphärenluft erzeugt (Anspruch 8).
Für die Ozonerzeugung wird ein handelsüblicher Ozonisator (7a) eingesetzt, welcher durch Funkenentladung aus Luftsauerstoff Ozon erzeugt.
Um eine optimale Wirkung des Ozons auf das fetthaltige Abwasser zu gewährleisten, durchläuft das Abwasser den Reaktor mehrfach. Diesen Abwasserdurchsatz bewirkt eine Kreiselpumpe (8) mit einer geringen Energieaufnahme (Anspruch 6 bis 8).
Die Pumpe (Anspruch 8) wälzt das Abwasser vom Fettabscheideraum über Rohrleitungen (8a) zum Reaktor und wieder zurück in den Schlammfang.
Auf diese Weise ergibt sich ein geschlossener Abwasserkreislauf.
Weiterhin bewirkt dieser Kreislauf auch eine weiterführende Schwerkraftabscheidung, da die Oberflächenkontaktierung erweitert wird (Anspruch 9).

Ein Ausführungsbeispiel der Erfindung wird im Folgenden anhand der Zeichnungen näher erläutert.

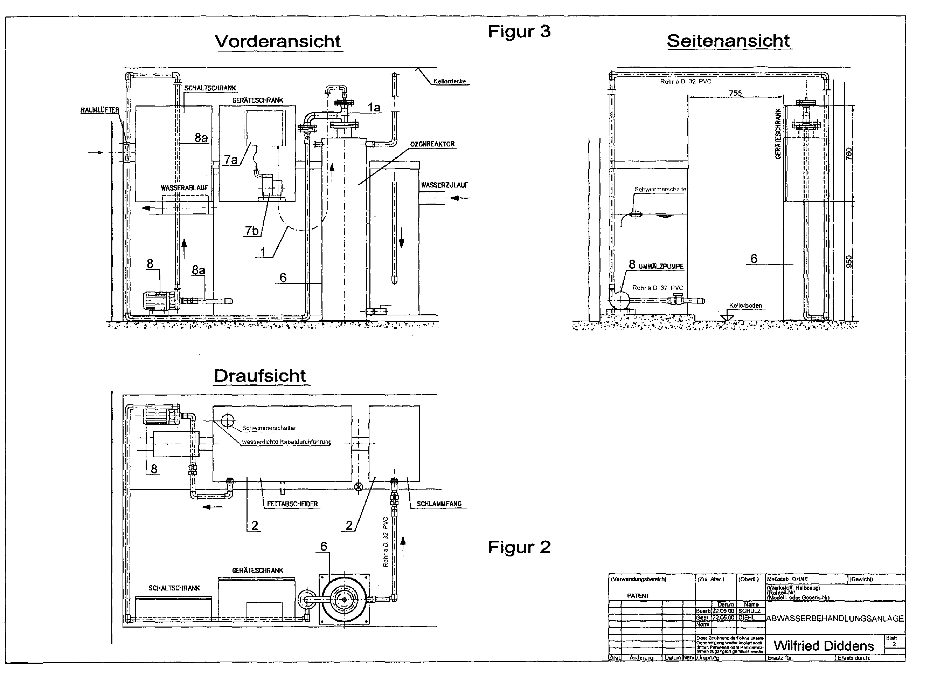

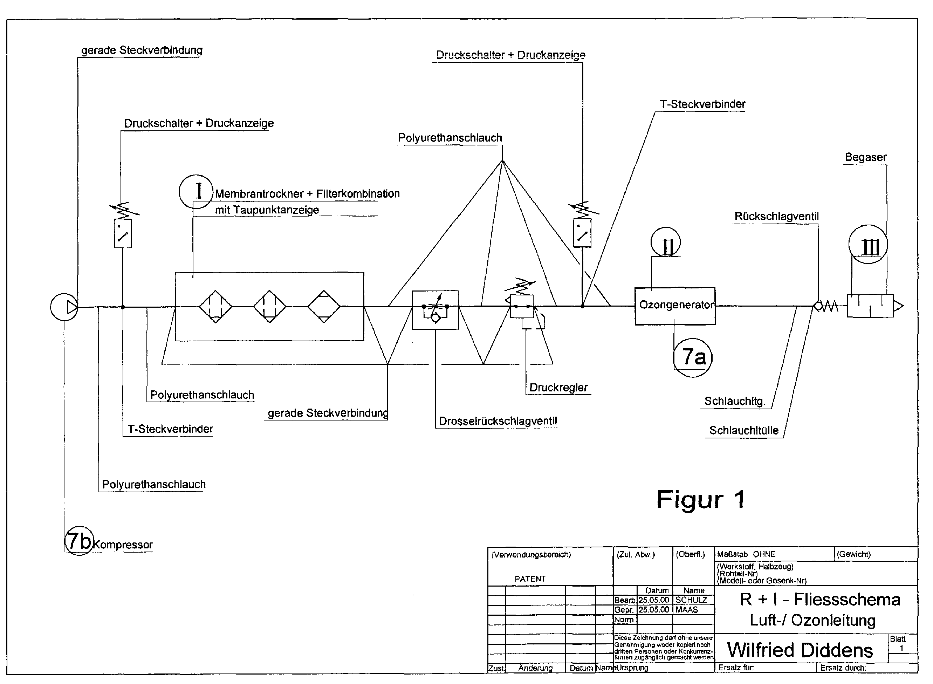

- Figur 1:: zeigt das Fließschema
- Figur 2:: zeigt Draufsicht der Realisierungsmöglichkeit
- Figur 3:: zeigt die Ansichten

### Zusammenfassung:

Die Erfindung betrifft ein Verfahren und eine Anlage zur Behandlung von Fetten in Abwässern (Fettabscheider). In das fetthaltige Abwasser wird Ozon mittels Pressluft eingebracht, so dass Fett durch Oxidation abgebaut wird (Anspruch 6 und 7). Die erfindungsgemäße Abwasserbehandlungsanlage reduziert wirksam den Anteil von lipophilen Bestandteilen im Abwasser. Gleichzeitig wird der CSB-Wert positiv beeinflusst und somit der Sauerstoffanteil im Abwasser erhöht. Dabei ist von großer Bedeutung, dass bereits bestehende schwerkraftabhängige Fettabscheidesysteme problemlos nachzurüsten sind. Durch die Verwendung eines Ozonisators wird das Verfahren ohne Einsatz von Betriebsstoffen durchführbar.

## Patentansprüche

1. Verfahren zur Behandlung von Fettemulgierungen in Abwässem, **dadurch gekennzeichnet, dass** Ozon in das Abwasser eingeblasen wird und die vorhandenen Emulgierungen gekräckt werden.

2. Verfahren nach Anspruch 1, **dadurch gekennzeichnet, dass** das Abwasser zuvor einen Schlammfang und einen Schwerkraftfettabscheider durchläuft.

3. Verfahren nach mindestens einem der Ansprüche 1 und 2, **dadurch gekennzeichnet, dass** das behandelte Abwasser in einen Schlammfang oder in einen Schwerkraftfettabscheider geleitet wird.

4. Verfahren nach Anspruch 3, **dadurch gekennzeichnet, dass** der eventuell entstehende fetthaltige Schaum und die oxidierte Fettschlacke dem Schwerkraftfettabscheider zugeführt werden.

5. Verfahren nach Anspruch 4, **dadurch gekennzeichnet, dass** die oxidierte Fettschlacke der im Schwerkraftfettabscheider oben schwimmenden Fettschicht zugeführt wird.

6. Anlage zur Durchführung des Verfahrens nach Anspruch 1 mit einem Schlammfang und einem Schwerkraftfettabscheider, **dadurch gekennzeichnet, dass** die Anlage einen Reaktor mit einer Begasungseinrichtung aufweist.

7. Anlage nach mindestens einem der Ansprüche nach 6 und 7, **dadurch gekennzeichnet, dass** Ozon mittels eines Kompressors und eines Ozongenerators aus Umgebungsluft erzeugt wird.

8. Anlage nach mindestens einem der Ansprüche 6 bis 8, **dadurch gekennzeichnet, dass** eine Umwälzpumpe vorgesehen ist, die das im Reaktor zurückgebliebene Wasser in den Schlammfang transportiert.

9. Verwendung eines Ozonisators zur Reduzierung von Fettemulsionen und Fett in Abwässem.

10. Verfahren ohne zusätzliche Betriebsstoffe
